Europäisches Patentamt

European Patent Office

Office européen des brevets

(19)

(11) Veröffentlichungsnummer: **0 352 779 B1**

# EUROPÄISCHE PATENTSCHRIFT

(12)

(45) Veröffentlichungstag der Patentschrift:
04.12.91 Patentblatt 91/49

(51) Int. Cl.$^5$: **C02F 9/00, C02F 1/78,** C02F 1/44

(21) Anmeldenummer: 89113831.5

(22) Anmeldetag: 27.07.89

(54) Transportable Anordnung zur Gewinnung von Trinkwasser.

(30) Priorität: 29.07.88 AT 1926/88

(43) Veröffentlichungstag der Anmeldung:
31.01.90 Patentblatt 90/05

(45) Bekanntmachung des Hinweises auf die
Patenterteilung:
04.12.91 Patentblatt 91/49

(84) Benannte Vertragsstaaten:
BE CH DE FR GB IT LI LU NL SE

(56) Entgegenhaltungen:
DE-A- 2 424 563
US-A- 4 042 509
US-A- 4 595 498

(73) Patentinhaber: **Marius, Dietrich, Dipl.-Ing.**
**Uferstrasse 9**
**A-5201 Seekirchen (AT)**
Patentinhaber: **Müller, Erich**
**Geismayerstrasse 7**
**A-5020 Salzburg (AT)**

(72) Erfinder: **Marius, Dietrich, Dipl.-Ing.**
**Uferstrasse 9**
**A-5201 Seekirchen (AT)**

(74) Vertreter: **Hofinger, Engelbert et al**
**Torggler-Hofinger Wilhelm-Greil-Strasse 16**
**A-6020 Innsbruck (AT)**

**Beschreibung**

Die Erfindung bezieht sich auf eine transportable Anordnung zur Gewinnung von Trinkwasser aus insbesondere durch Öl kontaminiertem Wasser, mit einen Grobfilter umfassenden Einrichtungen zur Filterung und zur nachherigen Ozonisierung des Wassers.

Bekannte derartige Einrichtungen dienen dazu, einerseits grobe Verunreinigungen aus dem Wasser zu entfernen, andererseits allfällige Krankheitskeime zu zerstören. Damit haben derartige Einrichtungen besonders in Entwicklungsländern ein breites Anwendungsgebiet.

In industrialisierten Gegenden mit normalerweise gesicherter Trinkwasserversorung ist der Einsatz fahrbarer Einrichtungen zur Gewinnung von Trinkwasser im wesentlichen auf Katastrophenfälle beschränkt. Am häufigsten handelt es sich um Verunreinigungen des Wassers durch Öle oder Benzin. Diese Substanzen werden durch die üblichen Grobfilter nicht zurückgehalten. Wenn sie daher in eine herkömmliche Trinkwasserreinigungsanlage gelangen, überlasten und verschmutzen sie die Ozonisierungseinrichtung. Selbst wenn sie beim Durchgang durch diese oxidativ abgebaut werden, ist das Endprodukt für den menschlichen Genuß ungeeignet.

Durch die Erfindung konnte die Aufgabe gelöst werden, Einrichtungen der eingangs genannten Art, welche lediglich zur Entfernung grober Verunreinigungen und zur Vernichtung von Bakterien geeignet sind, mit geringem Aufwand auch für den Einsatz bei Ölverschmutzungen geeignet zu machen. Erfindungsgemäß wird diese Aufgabe dadurch gelöst, daß die Einrichtung zur Filterung des Wassers zusätzlich eine Mikrofiltriereinrichtung mit mindestens einer rückspülbaren Membran einer nominellen Porengröße unter 1 μm, vorzugsweise etwa 0,2 μm, umfaßt.

Die Wirkung der erfindungsgemäßen Anordnung beruht darauf, daß ins Wasser gelangte Öl- oder Benzinrückstände zu etwa 90% in emulgierter oder suspendierter Form vorliegen und durch Mikrofiltration beseitigt werden können. Der gelöste Rest kann durch die Einrichtung zur Ozonisierung unschädlich gemacht werden, in welcher er oxidativ abgebaut wird. Die Rückstände aus der Oxidation können gegebenenfalls leicht in bekannter Weise durch einen Aktivkohlefilter od.dgl. zurückgehalten werden.

Ein besonderer Vorteil der erfindungsgemäßen Einrichtung liegt darin, daß sie mit vergleichsweise einfachen Zusatzeinrichtungen so ausgebildet werden kann, daß auch bei chemischer oder radioaktiver Verseuchung des Wassers damit Trinkwasser gewonnen werden kann. Im zivilen wie im militärischen Katastrophenfall ist die Lösung dieser Aufgabe an sich dadurch erschwert, daß nicht jeder Anlage ein ausgebildeter Chemiker beigegeben werden kann und eine einwandfreie Handhabung auch in Ausnahmesituationen ohne spezielle Ausbildung des Bedienungspersonals sichergestellt sein soll. Es soll insbesondere nicht notwendig sein, die Art der vorliegenden Verunreinigung, insbesondere die chemische Zusammensetzung, zu analysieren. Auch im Langzeitbetrieb soll möglichst ohne geschultes Personal ausgekommen werden, was die Anwendung chemischer Verfahren, wie etwa der Abscheidung durch Flokkulation, ausschließt.

Ergänzungsbedürftig ist die vorgeschlagene Einrichtung insbesondere dann, wenn damit gerechnet werden muß, daß das Wasser gelöste, durch Mikrofiltrierung also nicht zu beseitigende Stoffe enthält, welche auch durch Ozonisierung nicht unschädlich gemacht werden können. Ein Beispiel dafür sind hochchlorierte Chemikalien, wie sie in Pestiziden oder chemischen Kampfstoffen vorkommen können.

Derartige Stoffe werden nach einer bevorzugten Ausführung der Erfindung dadurch beseitigt, daß der Mikrofiltriereinrichtung eine Einrichtung zur Umkehrosmose nachschaltbar ist.

Da im Falle radioaktiver Verunreinigungen auch jene geringen Mengen schädlich sein können, welche durch die Einrichtung zur Umkehrosmose hindurchgehen, muß zur Ausschaltung solcher Verunreinigungen eine gänzliche Entfernung aller Ionen erfolgen. Es wird daher vorgesehen, daß der Einrichtung zur Umkehrosmose ein Mischbett-Ionenaustauscher und eine Einrichtung zur Aufsalzung des gereinigten Wassers nachschaltbar ist. Die Einrichtung zur Aufsalzung des Wassers hat dabei den Zweck, das Wasser für den menschlichen Genuß wieder brauchbar zu machen, da völlig reines Wasser bekanntlich giftig wirkt.

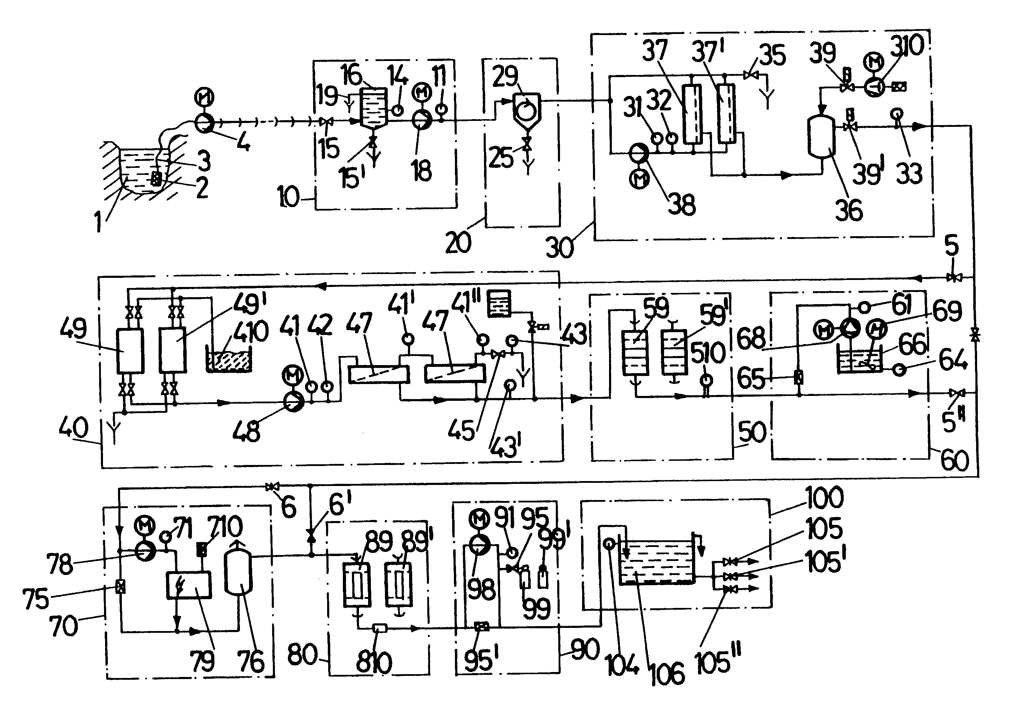

Weitere Einzelheiten der Erfindung werden anschließend anhand der Zeichnung erläutert, welche ein Blockschema eines Ausführungsbeispieles der Erfindung darstellt.

Die wesentlichen Bestandteile der dargestellten Einrichtung sind ein Rohwassertank 10, ein Hydrozyklon 20, eine Mikrofiltriereinrichtung 30, eine Einrichtung 40 zur Umkehrosmose, ein Mischbett-Ionenaustauscher 50, eine Aufsalzungseinrichtung 60, eine Einrichtung 70 zur Ozonisierung, ein Aktivkohlefilter 80, eine Einrichtung 90 zur Depotchlorung und schließlich ein Trinkwassertank 100. Im einzelnen wird der Aufbau dieser Elemente im Zusammenhang mit deren Funktion beschrieben.

Das zu reinigende Wasser 1 gelangt über ein Ansauggitter 2 und eine Schlauchleitung 3 zunächst zu einer außerhalb der erfindungsgemäßen Einrichtung angeordneten Rohwasserpumpe 4 und von dort in den Rohwassertank 10. Die Versorgung der Anlage mit Rohwasser kann natürlich auch auf andere Weise erfolgen.

Wesentlicher Bestandteil des Rohwassertanks 10 ist der Behälter 16, dessen Aufgabe es ist, den an der Druckpumpe 18 anstehenden Flüssigkeitsdruck zu stabilisieren. Dazu dient einerseits ein Überlauf 19, andererseits ein Niveaufühler 14, welcher die Druckpumpe 18 abschaltet, wenn der Flüssigkeitsvorrat im Behälter 16 zu gering wird. Die Flüssigkeitszufuhr zum Behälter 16 wird über das Ventil 15 gesteuert. Zwecks Reinigung des Behälters 16 kann das Abschlammventil 15' geöffnet werden, um Material abzulassen, welches sich im kegelförmigen Bodenteil des Behälters 16 angesammelt hat. Die Druckpumpe 18 baut in der Flüssigkeit einen durch den Druckmesser 11 überwachten Druck von einigen bar auf, welcher das zu reinigende Wasser durch den Hydrozyklon 20 und die Mikrofiltriereinrichtung 30 bewegt.

Im Hydrozyklon 20 erfolgt unter Ausnützung der Zentrifugalkraft die Abscheidung aller suspendierten Teilchen, deren Durchmesser über 100 μm liegt. Die Entfernung derartiger Verunreinigungen erfolgt über ein Kugelhahnventil 25.

Kern der erfindungswesentlichen anschließenden Mikrofiltriereinrichtung 30 sind Membranen 37 und 37', an denen das Rohwasser, welches im wesentlichen unter dem Druck der Druckpumpe 18 steht, mittels der Umwälzpumpe 38 entlanggeführt wird. Zur Druckkontrolle ist ein Druckmesser 31 vorgesehen, ein Temperaturfühler 32 schaltet die Umwälzpumpe 38 ab, wenn durch diese soviel Energie in das System eingetragen wird, daß die Membranen 37 und 37' Schaden leiden könnten.

Von dem nicht durch die Membranen 37, 37' gehenden Flüssigkeitsstrom wird laufend etwa 25% durch das entsprechend eingestellte Drosselventil 35 abgeleitet.

Die Membranen 37 und 37' weisen eine nominelle Porengröße von 0,2 μm auf. Deshalb können hier nicht nur suspendierte Teilchen, sondern auch emulgierte Stoffe, insbesondere im Wasser emulgiertes Öl, entfernt werden.

Die Reinigung der vorzugsweise aus gesintertem Polypropylen bestehenden Membranen 37, 37' erfolgt, indem aus dem Rückspülbehälter 36 mittels des Kompressors 310 Wasser gegen die Strömungsrichtung durch die Filter 37, 37' gepreßt wird. Während des entsprechenden kurzen Druckstoßes ist jeweils ein Magnetventil 39 geöffnet und ein sonst offenes Magnetventil 39' geschlossen.

Von einem Druckflußmesser 33 kontrolliert, gelangt das gefilterte Wasser aus der Mikrofiltriereinrichtung 30 an die Ventile 5, 5', deren Stellung festlegt, ob der nächste Verfahrensschritt in der Einrichtung 40 für die Umkehrosmose oder in der Einrichtung 70 für die Ozonisierung stattfindet.

Die Einrichtung 40 zur Umkehrosmose umfaßt als wesentlichsten Teil zwei semipermeable Wände 47, 47'. Die Umkehrosmose kann ja als ein Filtrationsverfahren bezeichnet werden, bei dem unter Druck durch halbdurchlässige Membranen Wasser hindurchtritt, wogegen gelöste Salze zurückgehalten werden. Der notwendige Druck wird von einer Hochdruckpumpe (z.B. 23 bar) 48 geliefert und durch Druckmesser 41, 41', 41" überprüft. Durchflußmesser 43 und 43' überwachen die Aufteilung der Lösung in einen hochkonzentrierten Produktstrom (ca. 25 bis 40%) und einen niedrig konzentrierten Permeatstrom.

Der Hochdruckpumpe 48 vorgeschaltet sind zwei wahlweise betätigbare Enthärter üblicher Bauart, in denen das Wasser durch Ersatz von Ca durch Na, welches in Form von NaCl aus dem Behälter 410 zugeführt wird, enthärtet wird.

Obwohl in der Einrichtung 40 zur Umkehrosmose ca. 90 bis 95% aller gelösten Stoffe beseitigt werden, gibt es Anwendungsfälle, in denen auch die Kombination von Mikrofiltration und Umkehrosmose noch nicht zu Trinkwasser führt. Gedacht ist hier insbesondere an gelöste Radionukleide, zu deren Entfernung der Mischbett-Ionenaustauscher 50 vorgesehen ist. Diese Einrichtung umfaßt mehrere mit Ionenaustauscharzen gefüllte Behälter 59 bzw. 59', von denen jeweils der mit unverbrauchtem Material gefüllte über eine Schnellkupplung in den Flüssigkeitsstrom eingeschaltet wird. Mittels der im H+ bzw. OH− Zyklus arbeitenden Ionenaustauschharze werden in Lösung befindliche Kationen bzw. Anionen an das Harz angelagert. Im Austausch werden äquivalente Mengen H+ bzw. OH− vom Harz abgegeben, welche zu $H_2O$ reagieren. Es werden sämtliche gelösten anorganischen Salze entfernt. Die Wirksamkeit des Mischbett-Ionenaustausches 50 und der Zeitpunkt des Austausches werden mittels eines Leitfähigkeitsgerätes 510 überprüft. Werte von 0,1 μ Siemens/cm sind hier durchaus erreichbar, was auf praktisch völlige Ionenfreiheit des Wassers hinweist. Das aus dem Mischbett-Ionenaustauscher 50 kommende Wasser ist daher für den menschlichen Genuß auch nicht geeignet und muß erst in der Aufsalzungseinrichtung 60 wieder genießbar gemacht werden.

Die Aufsalzungseinrichtung 60 besteht im dargestellten Beispiel aus einem Behälter 66, in welchem mittels eines Mischers 69 eine Lösung essentieller Salze hergestellt wird. Diese gelangt über eine Membrandosierpumpe 68 und einen Druckmesser 61 durch das Rückschlagventil 65 in den Strom des völlig gereinigten Wassers.

Falls das Wasser — wie beschrieben — einer Umkehrosmose unterzogen worden ist, kann es im allgemeinen direkt dem Trinkwassertank 100 zugeführt werden. Jedenfalls ist es nicht notwendig, es durch die Einrichtung 70 zur Ozonisierung zu leiten, sodaß bei geschlossenem Ventil 6 und geöffnetem Ventil 6' vor der endgültigen Lagerung im Trinkwassertank 100 lediglich noch vorsorglich eine Durchführung durch den Aktivkohlefilter 80 mit anschließender Depotchlorung erfolgt.

Auch die Aktivkohlefilteranlage 80 umfaßt mehrere mit Filtermaterial gefüllte Behälter 89 und 89', die wahlweise einsetzbar sind, wobei der Austausch jeweils erfolgt, wenn der Wasserzähler 810 eine bestimmte Gesamtmenge an gefiltertem Wasser festgestellt hat.

Die Einrichtung 90 zur Depotchlorung hat den Zweck, durch Zugabe von Chlor aus den Behältern 99 bzw. 99' über das Ventil 95 eine Anreicherung des mittels der Pumpe 98 am Rückschlagventil 95' vorbeigeleiteten Wassers mit Chlor zu erreichen, um eine neuerliche Verkeimung zu verhindern. Die Pumpleistung wird in Abhängigkeit von dem am Druckmesser 91 festgestellten Wert bestimmt.

Der Trinkwassertank, aus dem schließlich das trinkbare Wasser über die Hähne 105, 105', 105" entnommen werden kann, ist konventionell aufgebaut. Er besteht im wesentlichen aus einem Behälter 106 mit einem Niveaufühler 104.

Insbesondere dann, wenn das zu reinigende Wasser keiner Umkehrosmose oder zumindest keinem Ionenaustausch unterworfen worden ist, bildet die Ozonisierung in der entsprechenden Einrichtung 70 einen wesentlichen Verfahrensschritt. Diese Einrichtung umfaßt neben einem Rückschlagventil 75 eine Hochdruckpumpe 78, welche über einen Druckmesser 71 das Wasser in die Ozonanlage 79 bringt. In dieser wird einerseits durch elektrische Entladungen mittels Hochspannungsröhren die durch den Filter 710 angesaugte Luft teilweise in Ozon verwandelt, andererseits dieses Ozon dem in einer Wasserstrahlpumpe die Anlage 79 durchströmenden Wasser beigemischt. Der oxidative Abbau allenfalls im Wasser vorhandener oxidierbarer Substanzen, insbesondere von Bakterien und Viren, erfolgt im Reaktionsbehälter 76.

Bei einer Kapazität von ca. 3.000 Liter pro Stunde hat die in der Zeichnung schematisch dargestellte Gesamtanlage ein Gewicht von ca. 2 Tonnen. Sie kann in einem Behälter im Ausmaß von etwa 2 × 2 × 4 m untergebracht werden. Das bedeutet, daß die Anlage mittels eines handelsüblichen LKW transportabel ist, wobei sie zum Betrieb wahlweise auf dem LKW verbleiben oder am Boden abgesetzt werden kann. Wenn an der Einsatzstelle keine Energieversorgung verfügbar ist, kann die Anlage durch eine Eigenstromversorgung ergänzt werden, die vorzugsweise auf einem gesonderten Achsanhänger angebracht ist.

Der besondere Vorteil der beschriebenen Einrichtung liegt darin, daß sie das gesamte Spektrum möglicher Verunreinigungsfälle abdeckt, was insbesondere für den militärischen Einsatz wichtig ist, da hier die Art des eingesetzten Kampfmittels nicht vorausgesagt werden kann. Ist hingegen die Art der Verunreinigung vorweg bekannt, so ist ein Einsatz beschränkt auf die notwendigen Modulen möglich, sodaß eine weitgehende Schonung der einzelnen Baugruppen sichergestellt ist.

## Patentansprüche

1. Transportable Anordnung zur Gewinnung von Trinkwasser aus insbesondere durch Öl kontaminiertem Wasser, mit einen Grobfilter umfassenden Einrichtungen zur Filterung und zur nachherigen Ozonisierung des Wassers, dadurch gekennzeichnet, daß die Einrichtung zur Filterung des Wassers zusätzlich eine Mikrofiltriereinrichtung (30) mit mindestens einer rückspülbaren Membran (37, 37') einer nominellen Porengröße unter 1 μm, vorzugsweise etwa 0,2 μm, umfaßt.

2. Anordnung nach Anspruch 1, dadurch gekennzeichnet, daß die Membran(en) (37, 37') der Mikrofiltriereinrichtung (30) aus gesintertem Polypropylen besteht(en).

3. Anordnung nach Anspruch 1 oder 2, dadurch gekennzeichnet, daß die Anordnung eine Einrichtung (40) zur Umkehrosmose umfaßt, welche der Mikrofiltriereinrichtung (30) nachschaltbar ist.

4. Anordnung nach Anspruch 3, dadurch gekennzeichnet, daß die Einrichtung (40) zur Umkehrosmose in an sich bekannter Weise mindestens einen Wasserenthärter (49, 49') umfaßt.

5. Anordnung nach Anspruch 3 oder 4, dadurch gekennzeichnet, daß die Anordnung einen Mischbett-Innenaustauscher (50) und eine Einrichtung (60) zur Aufsalzung des gereinigten Wassers umfaßt, welche der Einrichtung (40) zur Umkehrosmose nachschaltbar sind.

## Claims

1. A transportable arrangement for producing drinking water from in particular oil-contaminated water, having means which include a coarse filter, for filtration and for subsequent ozonisation of the water, characterised in that the means for filtering the water additionally includes a microfiltration means (30) with at least one back-flushable membrane (37, 37') of a nominal pore size of below 1 μm, preferably about 0. 2 μm.

2. An arrangement according to claim 1 characterised in that the membrane or membranes (37, 37') of the microfiltration means (30) comprises or comprise sintered polypropylene.

3. An arrangement according to claim 1 or claim 2 characterised in that the arrangement includes a means (40) for reverse osmosis, which can be connected downstream of the microfiltration means (30).

4. An arrangement according to claim 3 characterised in that the means (40) for reverse osmosis comprises at least one water softener (49, 49') in per se known manner.

5. An arrangement according to claim 3 or claim 4 characterised in that the arrangement includes a mixed bed ion exchanger (50) and a means (60) for salting the purified water, wherein said exchanger and said salting means can be connected downstream of the means (40) for reverse osmosis.

## Revendications

1. Installation mobile de production d'eau potable, en particulier à partir d'eau contaminée par de l'huile, à l'aide de dispositifs, comprenant un filtre grossier, pour filtrer et ensuite ozonifier l'eau, caractérisée en ce que le dispositif pour filtrer l'eau comprend en outre un dispositif de microfiltration (30), avec au moins une membrane (37, 37') susceptible d'être rincée par un contre-courant, d'une taille de pore nominale inférieure à 1 µm, de préférence d'à peu près 0,2 µm.

2. Installation selon la revendication 1, caractérisée en ce que la (les) membrane(s) (37, 37') du dispositif de microfiltration (30) se compose(nt) de polypropylène fritté.

3. Installation selon la revendication 1 ou 2, caractérisée en ce que l'installation comprend un dispositif (40) à osmose inverse, qui est susceptible d'être mis en circuit en aval de la microfiltration (30).

4. Installation selon la revendication 3, caractérisée en ce que le dispositif (40) à osmose inverse comprend, de manière connue en soi, au moins un adoucisseur d'eau (49, 49').

5. Installation selon la revendication 3 ou 4, caractérisée en ce que le dispositif comprend un échangeur intérieur à lit mélangé (50) et un dispositif (60), pour reminéraliser l'eau purifiée, qui sont susceptibles d'être mis en circuit en aval du dispositif (40) à osmose inverse.